# EUROPÄISCHE PATENTANMELDUNG

(11) **EP 0 684 449 A1**
(43) Veröffentlichungstag der Anmeldung: **29.11.1995**
(21) Anmeldenummer: 95890097.9
(22) Anmeldetag: 24.05.1995
(51) Int. Cl.: G01C 15/04, B28B 7/24

(54) **Grenzstein, Verfahren zu seinem Versetzen und Vorrichtung zu seiner Herstellung**

(30) Priorität: 26.05.1994 AT 94/94
(71) Anmelder: Ertl, Johann, A-3250 Wieselburg (AT)
(72) Erfinder: Ertl, Johann, A-3250 Wieselburg (AT)
(74) Vertreter: Müllner, Erwin, Dr.

(57) **Zusammenfassung**

Ein Betonquader, in dem längsmittig ein Durchgangsloch vorgesehen ist, das als Auskleidung ein Rohr aus Metall, z.B. ein verzinktes Eisenrohr, aufweist, wird als Grenzstein verwendet. Die Vorrichtung zur Herstellung des Grenzsteines weist eine Grundplatte (1) auf, auf der zur Bildung von mehreren Formschalen (5) in gleichen Abständen voneinander angeordnete abnehmbare Längswände (2) und in gleichen Abständen voneinander angeordnete abnehmbare Querwände (3, 4) vorgesehen sind, wobei die Querwände (3, 4) innerhalb jeder gebildeten Formschale (5) mittig in die Formschale (5) ragende Zapfen (6) aufweisen.

## Beschreibung

Grenzsteine sind bekannterweise Quader aus Stein oder Beton. Das Versetzen von Grenzsteinen ist verhältnismäßig mühsam. Üblicherweise wird nach dem Vermessen an der Stelle, an der ein Grenzstein versetzt werden soll, eine Stange in den Boden geschlagen. Dann wird mittels Gummischnüren, an deren Enden Pflöcke zum Einschlagen in den Boden befestigt sind, ein Fadenkreuz gebildet, wobei der Kreuzungspunkt der Schnüre mit dem zu markierenden Punkt übereinstimmt. Anschließend wird die Stange entfernt und unterhalb der sich kreuzenden Schnüre die Erde ausgehoben und der Grenzstein versetzt. Die bekannten Grenzsteine haben außerdem die Nachteile, daß sie - insbesondere nach einiger Zeit nach ihrem Versetzen - nicht gut sichtbar und schwer auffindbar sind. Falls die durch Grenzsteine markierten Punkte für das spätere Vermessen gebraucht werden, wird normalerweise über dem Grenzstein ein dreifüßiges, eine Meßstange tragendes Gestell, an dem ein Lot vorgesehen ist, angeordnet, wobei das Gestell so aufgestellt werden muß, daß das Lot exakt über dem durch den Grenzstein markierten Punkt zu hängen kommt. Auch diese Verfahrensweise ist verhältnismäßig umständlich.

Erfindungsgemäß wird ein Grenzstein vorgeschlagen, bei dem alle oben aufgezeigten Nachteile vermieden sind. Der Grenzstein, der erfindungsgemäß verwendet werden soll, besteht aus einem Betonquader, in dem längsmittig ein Durchgangsloch vorgesehen ist, das als Auskleidung ein Rohr aus Metall, z.B. ein verzinktes Eisenrohr, aufweist.

Der erfindungsgemäß zu verwendende Grenzstein besteht aus Gußbeton und hat bevorzugt die Ausmaße 10 cm x 10 cm x 60 cm. Das als Auskleidung des im Grenzstein vorgesehenen Durchgangsloches vorgesehene verzinkte Eisenrohr hat einen Außendurchmesser von 26 mm und einen Innendurchmesser von 20 mm.

Die erfindungsgemäß zu verwendenden Grenzsteine erweisen sich bei vorzunehmenden Vermessungen als äußerst zweckmäßig. Die für Vermessungen erforderliche Vermessungsstange braucht nicht mehr von einer Person über dem Mittelpunkt des Grenzstenes gehalten werden, sondern kann einfach in das im Grenzstein vorhandene Durchgangsloch gesteckt werden. Durch den Umstand, daß der erfindungsgemäß zu verwendende Grenzstein mit einem Metallrohr armiert ist, ist ein Abschlagen seines aus dem Boden ragenden Teiles kaum mehr möglich. Außerdem ist der erfindungsgemäß zu verwendende Grenzstein mit Hilfe eines Metallsuchgerätes leicht auffindbar. Dies ist insofern von Vorteil, als Grenzsteine oft von Pflanzen überwachsen oder durch Erdreich verschüttet sind.

Mit dem erfindungsgemäß zu verwendenden Grenzstein ist ein millimetergenaues Versetzen auf einfache Weise möglich. Das Verfahren zum Versetzen des als Grenzstein dienenden Betonquaders ist erfindungsgemäß dadurch gekennzeichnet, daß an dem zu markierenden Punkt ein Rundstab in den Boden eingeschlagen wird, anschließend um den Stab die Erde ausgehoben und der Grenzstein über die Stange geschoben wird, wonach der Grenzstein im Boden fixiert und der Rundstab entfernt wird. Für das Versetzen ist nur eine Person notwendig, sodaß Arbeitszeit eingespart werden kann.

Der erfindungsgemäß zu verwendende Grenzstein ist in einfacher und kostengünstiger Weise durch eine Vorrichtung gemäß der Erfindung herstellbar. Diese Vorrichtung ist dadurch gekennzeichnet, daß sie eine Grundplatte aufweist, auf der zur Bildung von mehreren Formschalen in gleichen Abständen voneinander angeordnete abnehmbare Längswände und in gleichen Abständen voneinander angeordnete abnehmbare Querwände vorgesehen sind, wobei die Querwände innerhalb jeder gebildeten Formschale mittig in die Formschale ragende Zapfen aufweisen.

Vorzugsweise weisen die an ihren Stirnenden angeordneten Querwände Aufnahmeschlitze zur Fixierung der Längswände auf.

Nach einem weiteren Merkmal der Erfindung sind die im Bereich zwischen ihren Stirnenden angeordneten Querwände aus Hohlprofilen gebildet.

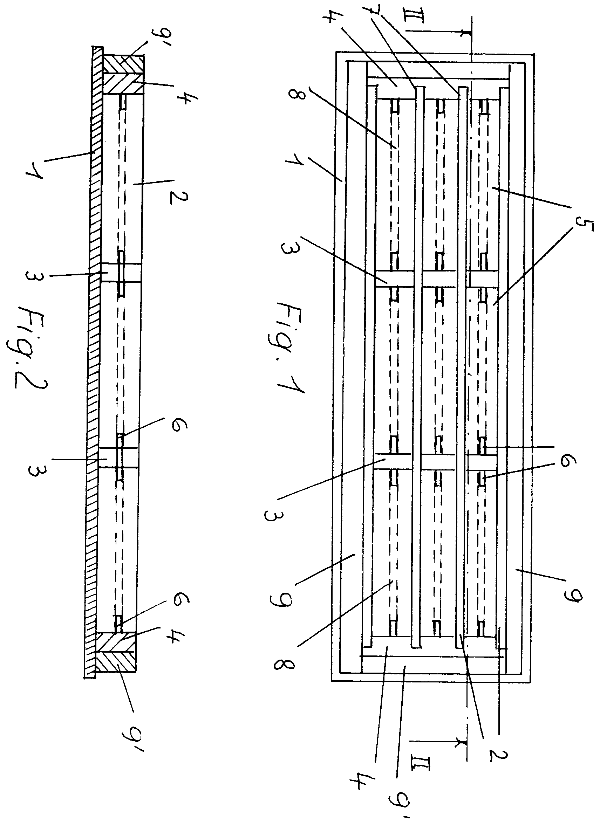

Der Erfindungsgegenstand wird an Hand der Zeichnung näher erläutert, wobei Fig. 1 eine schematische Draufsicht auf eine Vorrichtung zur Herstellung des Grenzsteines und Fig. 2 einen Schnitt nach der Linie II-II in Fig. 1 darstellt.

Die Vorrichtung zur Herstellung des erfindungsgemäß zu verwendenden Grenzsteines besteht aus einer Grundplatte 1,auf der durch Längswände 2 und Querwände 3, 4 Formschalen entsprechend der gewünschten Größe der Grenzsteine gebildet sind. Die Querwände 3, 4 weisen innerhalb jeder gebildeten Formschale 5 mittig Dorne oder Zapfen 6 auf. Bei der Herstellung der Grenzsteine dienen diese Zapfen als Halterung für die die Auskleidung der Durchgangslöcher der Grenzsteine bildenden Rohre 8, die in der Zeichnung strichliert eingezeichnet sind. Das Einsetzen der Rohre 8 ist dadurch möglich, daß die Querwände 3, 4 abnehmbar sind. Nachdem in den einzelnen Formschalen 5 auf den Zapfen 6 die Rohre 8 vorgesehen sind, werden die Formschalen 5 mit Beton ausgegossen. Um ein eventuelles Aufschwimmen der Längswände 2 zu verhindern, können ein oder mehrere Stäbe quer über die Längswände 2 gelegt und mit Klammern an der Grundplatte 1 befestigt werden. Nach dem Verfestigen des Betons werden die fertigen Grenzsteine aus der Form genommen, was ohne Schwierigkeiten durch aufeinanderfolgendes Entfernen der Querwände 3, 4 und der Grenzsteine möglich ist. Zur Fixierung der an den Stirnenden der Vorrichtung vorgesehenen abnehmbaren Querwände 4 sowie zur Fixierung der randseitigen Längswände 2 sind vierkantige, abnehmbare Abstützpfosten 9, 9' vorgesehen, die an ihrer der Grundplatte 1 zugewandten Seite vorstehende Dübel aufweisen, die in entsprechenden Löchern in der Grundplatte 1 stecken. Die Querwände 3 sind aus Hohlprofilen mit rechteckigem Querschnitt gebildet, die von den Zapfen 6 durchsetzt sind. Zwecks Ausschalen der fertigen Grenzsteine werden zunächst die Abstützpfosten 9, 9' entfernt. Letztere weisen auf ihrer der Grundplatte 1 zugewandten Seite Ausnehmungen auf, sodaß sie ohne Schwierigkeiten angehoben werden. Anschließend werden die stirnseitigen Querwände 4 und von den Längswänden 2 die randseitigen entfernt. Mittels eines Spezialwerkzeuges, das in die seitlich offenen, als Querwände 3 dienenden, Hohlprofile ansetzbar ist, können die fertigen Grenzsteine bzw. die Hohlprofile auf der Grundplatte verschoben werden, wodurch die fertigen Grenzsteine nacheinander ausgeschalt werden können.

Die erhaltenen Grenzsteine mit einem Durchgangsloch, das mit einem Rohr aus Metall ausgekleidet ist, sind - wie bereits gesagt - sehr einfach zu versetzen. Durch den Umstand, daß die Grenzsteine längsmittig ein Loch aufweisen, kann zu ihrem Sichtbarmachen in das Loch eine Stange gesteckt werden. Da das Loch mit einem Rohr aus Metall ausgekleidet ist, ist der Grenzstein leicht mittels eines Metallsuchgerätes aufzufinden. Soll der durch den Grenzstein markierte Punkt für Vermessungen gebraucht werden, so ist es lediglich notwendig, in das Loch des Grenzsteines eine Vermessungsstange zu stecken.

## Patentansprüche

1. Verwendung eines Betonquaders, in dem längsmittig ein Durchgangsloch vorgesehen ist, das als Auskleidung ein Rohr aus Metall, z.B. ein verzinktes Eisenrohr, aufweist, als Grenzstein.

2. Verfahren zum Versetzen des als Grenzstein dienenden Betonquaders, in dem längsmittig ein Durchgangsloch vorgesehen ist, das als Auskleidung ein Rohr aus Metall, z.B. ein verzinktes Eisenrohr, aufweist, dadurch gekennzeichnet, daß an dem zu markierenden Punkt ein Rundstab in den Boden eingeschlagen wird, anschließend um den Stab herum die Erde ausgehoben und der Grenzstein über die Stange geschoben wird, wonach der Grenzstein im Boden fixiert und der Rundstab entfernt wird.

3. Vorrichtung zum Herstellen des als Grenzstein dienenden Betonquaders, in dem längsmittig ein Durchgangsloch vorgesehen ist, das als Auskleidung ein Rohr aus Metall, z.B. ein verzinktes Eisenrohr, aufweist, dadurch gekennzeichnet, daß sie eine Grundplatte (1) aufweist, auf der zur Bildung von mehreren Formschalen (5) in gleichen Abständen voneinander angeordnete abnehmbare Längswände (2) und in gleichen Abständen voneinander angeordnete abnehmbare Querwände (3, 4) vorgesehen sind, wobei die Querwände (3, 4) innerhalb jeder gebildeten Formschale (5) mittig in die Formschale (5) ragende Zapfen (6) aufweisen.

4. Vorrichtung nach Anspruch 3, dadurch gekennzeichnet, daß die an ihren Stirnenden angeordneten Querwände (4) Aufnahmeschlitze (7) zur Fixierung der Längswände (2) aufweisen.

5. Vorrichtung nach Anspruch 3 oder 4, dadurch gekennzeichnet, daß die im Bereich zwischen ihren Stirnenden angeordneten Querwände (3) aus Hohlprofilen gebildet sind.
